# EUROPEAN PATENT APPLICATION

(11) **EP 1 972 571 A1**
(43) Date of publication of application: **24.09.2008**
(21) Application number: 08150958.0
(22) Date of filing: 01.02.2008
(51) Int. Cl.: B65D 81/32, A23D 7/005, A23L 1/30, A23L 2/02

(54) **Beverage container holding an aqueous liquid and an oleogenous liquid**

(30) Priority: 08.03.2007 EP 07103765
(71) Applicant: Unilever N.V., 3013 AL Rotterdam (NL); Unilever PLC, London Greater London EC4P 4BQ (GB)
(72) Inventor: Dekker, Rob, 3133 AT, Vlaardingen (NL); Louter, Adrianus, Johannes, 3133 AT, Vlaardingen (NL)
(74) Representative: Wurfbain, Gilles L.

(57) **Abstract**

The present invention provides a beverage container comprising two separate compartments, a first compartment having an internal volume of 2-50 ml holding an aqueous liquid and a second compartment having an internal volume of 2-50 ml holding an oleogenous liquid, said aqueous liquid and said oleogenous liquid being present in the container in a weight ratio of less than 3:1, said first compartment comprising a first dispensing aperture and said second compartment comprising a second dispensing aperture, wherein the first dispensing aperture and the second dispensing aperture can be simultaneously positioned in the mouth of an average adult human.

Unexpectedly, the inventors have discovered that if the aqueous liquid and the oleogenous liquid are simultaneously ingested from the beverage container, hardly no fatty mouthfeel is experienced by the consumer.

## Description

### TECHNICAL FIELD OF THE INVENTION

The present invention relates to a beverage container comprising two separate compartments, one compartment holding 2-50 ml of an aqueous liquid and the other compartment holding 2-50 ml of an oleogenous liquid.

### BACKGROUND OF THE INVENTION

US 2006/0151496 describes a cup for holding two or more beverages, comprising two receptacles having mating faces, means for holding the two receptacles together, a lid adapted to engage the open ends of the joined receptacles, and two straws extending through said lid into the respective receptacles, the straws being joined together so that the ends of the straws extending from the cup are accessible to a single user. It is stated in the US patent application that the separate receptacles of the aforementioned cup can deliver beverages of different viscosities to the user at approximately the same rate or, conversely, can deliver beverages of the same viscosity at different rates.

The consumption of oils as well as of fat-continuous production is inevitably accompanied by a fatty mouthfeel. This particular taste sensation is not always appreciated by consumers. Because a fatty mouthfeel is often associated by consumers with a high caloric content, it is particularly undesirable for products that are marketed as anti-obese, healthy, beautifying etc. to have a fatty mouthfeel. However, if such products contain a substantial fraction of oil it is difficult to provide a product format that does not give rise to a fatty mouthfeel sensation upon consumption.

One way of minimising the fatty mouthfeel of a product containing a substantial amount of oil is to provide the product in the form of an oil-in-water emulsion. Because oil-in-water emulsions show much less tendency to produce a fat-continuous film inside the mouth than e.g. water-in-oil emulsions, the mouthfeel of oil-in-water emulsions is usually perceived as being less fatty.

Oil-in-water emulsions can be produced without any major problems as long as the oil to water ratio does not become too high. If the weight ratio of oil to water exceeds e.g. 1:1 it will become increasingly more difficult to produce a stable oil-in-water emulsion. Furthermore, such oil-in-water emulsions tend to invert in the mouth, yielding a fat-continuous emulsion that produces a pronounced fatty mouthfeel.

Another problem associated with oil-in-water emulsions relates to undesirable interactions between on the one hand components in the water phase and on the other hand components in the oil phase. An example of such an undesirable interaction is the pro-oxidative effect of e.g. iron and copper ions in the water phase on unsaturated fatty acids in the oil phase.

### SUMMARY OF THE INVENTION

The inventors have found a surprisingly simple and effective way to deal with the problems described above. Unexpectedly, the inventors have discovered that if oil and water are simultaneously ingested from a single container, hardly no fatty mouthfeel is experienced by the consumer, even if the oil and water are ingested in a weight ratio of e.g. more than 1:1.

The inventors have found that it is critical that both liquids are ingested simultaneously as otherwise a pronounced fatty mouthfeel will be perceived. Thus, the present invention provides a beverage container containing an aqueous liquid as well as an oleogenous liquid, which liquids can be ingested simultaneously from said container.

### DETAILED DESCRIPTION OF THE INVENTION

Accordingly, the present invention provides a beverage container comprising two separate compartments, a first compartment having an internal volume of 2-50 ml holding an aqueous liquid and a second compartment having an internal volume of 2-50 ml holding an oleogenous liquid, said aqueous liquid and said oleogenous liquid being present in the container in a weight ratio of less than 3:1, said first compartment comprising a first dispensing aperture and said second compartment comprising a second dispensing aperture, wherein the first dispensing aperture and the second dispensing aperture can be simultaneously positioned in the mouth of an average adult human.

The term "dispensing aperture" as used herein refers to an opening through which the contents of a compartment of the container can be dispensed into the mouth of an average adult human. The aperture may simply be a hole in the wall of a compartment. However, the invention also encompasses embodiments in which the aperture is an opening in a protruding element that can be inserted in the mouth in order to allow the contents of a compartment to pass through the protruding element and the opening into the mouth. In yet another embodiment, the aperture is one end of a straw (e.g. a flexible straw) and the other end of the straw is fixated in the compartment wall so that the contents of the compartment can pass through the straw into the mouth. Naturally, these are all non-limiting examples of particular embodiments that are encompassed by the broad concept of the present invention.

It is noted that the dispensing apertures of the present beverage container may suitably be sealed in order to avoid spillage and also to prevent the contents of the container from becoming spoiled. In accordance with the present invention, however, the consumer should be able to open the apertures without great difficulty, e.g. by removing a cap, a lid or a seal or by puncturing a seal.

The term "aqueous liquid" as used herein encompasses any liquid composition containing a continuous aqueous phase. Thus, the aqueous liquid can be water or an aqueous solution. Furthermore, the aqueous liquid may be an oil-in-water emulsion or an aqueous dispersion. Most preferably, the aqueous liquid consists of water or an aqueous solution.

The term "oleogenous liquid" as used herein encompasses any liquid composition containing a continuous lipid phase. Thus, the oleogenous liquid can be a pure lipid or a single phase mixture of lipid components. Alternatively, the oleogenous liquid may be a water-in-oil emulsion or an oleogenous dispersion. Most preferably, the oleogenous liquid is a homogeneous liquid consisting of a single lipid phase.

The benefits of the present invention are particularly apparent in case a substantial amount of oleogenous liquid is to be consumed relative to the amount of aqueous liquid. Accordingly, in accordance with a particularly preferred embodiment, the present container contains the aqueous liquid and the oleogenous liquid in a weight ratio of less than 2:1, more preferably of less than 1:1.5 and most preferably of less than 1:1.2. Typically, the weight ratio of aqueous liquid to oleogenous liquid exceeds 1:5. Even more preferably, the weight ratio of aqueous liquid to oleogenous liquid exceeds 1:4. Most preferably, this ratio exceeds 1:3.

The oleogenous liquid employed in accordance with the present invention typically contains at least 50 wt.% of lipids. More preferably, the oleogenous liquid contains at least 80 wt.%, most preferably at least 90 wt.% of lipids. Examples of lipids that may suitably be applied in the present oleogenous liquid include triglycerides, diglycerides, monoglycerides, phospholipids and fat-soluble edible ingredients. According to a particularly preferred embodiment, the oleogenous liquid contains at least 50 wt.%, more preferably at least 80 wt.% of triglycerides.

As mentioned herein before, the oleogenous liquid may contain a dispersed aqueous phase. Preferably, however, the oleogenous liquid contains less than 25 wt.% of water. Even more preferably, the oleogenous liquid contains less than 10 wt.% of water. Most preferably, the oleogenous liquid contains less than 1 wt.% of water.

An example of an ingredient that is advantageously comprised in the oleogenous liquid is ω-3 polyunsaturated fatty acid (ω-3 PUFA). A wide range of health benefits have been attributed to ω-3 PUFA, which is why this ingredient is increasingly used in nutritional formulations. However, in order to deliver significant levels of ω-3 PUFA, substantial quantities of sources of ω-3 PUFA, such as fish oil, must be consumed. The present beverage container makes it possible to deliver substantial quantities of ω-3 PUFA in a concentrated dosage without producing an objectionable fatty mouthfeel. Accordingly, in an advantageous embodiment of the invention the oleogenous liquid contains at least 10 wt.% of ω-3 PUFA.
The total amount of ω-3 PUFA contained in the oleogenous liquid preferably is within the range of 30 - 6000 mg, most preferably of 300 - 1000 mg.

According to another preferred embodiment the oleogenous liquid contains 60-2000 mg of ω-3 polyunsaturated fatty acids selected from the group consisting of docosahexaenoic acid, eicosapentaenoic acid and combinations thereof.

The beverage container of the present invention advantageously contains little headspace. Thus, preferably, at least 80% and more preferably at least 90 % of the internal volume of the first compartment is filled with the aqueous liquid. Likewise, preferably at least 80% and more preferably at least 90% of the internal volume of the second compartment is filled with the oleogenous liquid.

As explained herein before, the beverage container according to the present invention is particularly suitable for delivering relatively large quantities of oleogenous material in small dosages (e.g. less than 100 ml) without causing an objectionable fatty mouthfeel. Hence, according to a particularly preferred embodiment, the combined volume of the aqueous liquid and the oleogenous liquid is in the range of 10-80 ml, most preferably in the range of 15-60 ml.

The liquids contained in the present beverage container are ideally suited for delivering essential food components such as minerals, vitamins and nutrients. According to a preferred embodiment, the aqueous liquid contains at least 10 mg of dissolved minerals, vitamins or nutrients. As regards minerals, according to a preferred embodiment, the aqueous liquid contains one or more of, preferably two or more of and most preferably three or more of:
- at least 1.4 mg iron;
- at least 0.2 mg copper;
- at least 1.5 mg zinc;
- at least 100 mg calcium;
- at least 30 mg magnesium.

According to a particularly preferred embodiment of the invention, the oleogenous liquid contains ω-3 PUFA and the aqueous liquid contains a pro-oxidative metal selected from the group consisting of iron and copper. The combined use of on the one hand ω-3 PUFA and on the other hand pro-oxidative metals poses a major problem in food applications as it is almost impossible to prevent rapid oxidation of ω-3 PUFA in the presence of these metals. The oxidation of ω-3 PUFA yields degradation products that exhibit a pungent objectionable flavour. Thus, oxidation of ω-3 PUFA must be prevented in order to prevent rejection of the product by consumers. In the present beverage container ω-3 PUFA is contained in the oleogenous liquid and physically separated from the pro-oxidative metal that is contained in the aqueous liquid. Thus, the undesirable catalytic effect of the pro-oxidative metal on the oxidation ω-3 PUFA is effectively prevented.

In accordance with a further preferred embodiment the aqueous liquid contains one or more of, preferably two or more of and most preferably three or more of:
- at least 6 mg of vitamin C;
- at least 0.14 mg of vitamin B1
- at least 0.16 mg of vitamin B2
- at least 1.8 mg of Niacin
- at least 0.6 mg of Pantothenic acid
- at least 0.2 mg of vitamin B6

The aqueous liquid may suitably contain high-calorie ingredients such as fat, carbohydrates and protein. Typically, the aqueous liquid contains between 0 and 35 cal.% protein and between 0 and 100 cal.% carbohydrates.

The aqueous liquid may suitably contain thickening agents, gelling agents and/or emulsifiers. These components may be employed to stabilise the aqueous liquid and/or to improve the in-mouth properties of the aqueous liquid. It is essential, however, that the aqueous liquid remains highly pourable so that it can be dispensed from the beverage container without any difficulty. Thus, according to a preferred embodiment, the aqueous liquid has a viscosity of 9 × 10⁻⁴ - 9 x 10⁻³ Pa.s at a shear rate of 100 s⁻¹ and a temperature of 20 °C. The viscosity of the aqueous liquid can suitably be determined by a Brookfield viscometer.

Like the aqueous liquid also the oleogenous liquid can advantageously be utilised as a vehicle for delivering fat-soluble or fat-dispersible components. According to a particularly preferred embodiment, the oleogenous liquid contains 7- 100 mg of isoflavones. According to another preferred embodiment, the oleogenous liquid contains 1 - 8 mg of lycopene. In yet another preferred embodiment, the oleogenous liquid contains 1- 250 mg of vitamin E. According to a particularly preferred embodiment, the oleogenous liquid contains the combination of isoflavones, lycopene and vitamin E.

Vitamins A and D and β-carotene can also advantageously be incorporated in the oleogenous liquid. Thus, the oleaginous liquid preferably contains at least 80 µg of vitamin A and/or at least 0.5 µg of vitamin D. Likewise, the oleogenous liquid advantageously contains 0.48- 10 mg of β-carotene.

In order to derive the benefits of the present invention it is not required that upon ingestion the aqueous liquid and the oleogenous liquid form a stable emulsion. As a matter of fact it is preferred that the aqueous liquid and the oleogenous liquid cannot be emulsified as such to produce an oil-in-water emulsion that is stable for more than 1 week. Even more preferably, the aforementioned liquids cannot be emulsified as such to produce an oil-water-emulsion that is stable for more than 1 day. Here the term stable is used to describe an emulsion that does not suffer from physical destabilisation phenomena that are visible to the naked eye such as oil exudation, flocculation, sedimentation etc.

The invention is further illustrated by means of the following examples.

### EXAMPLES

### Example 1

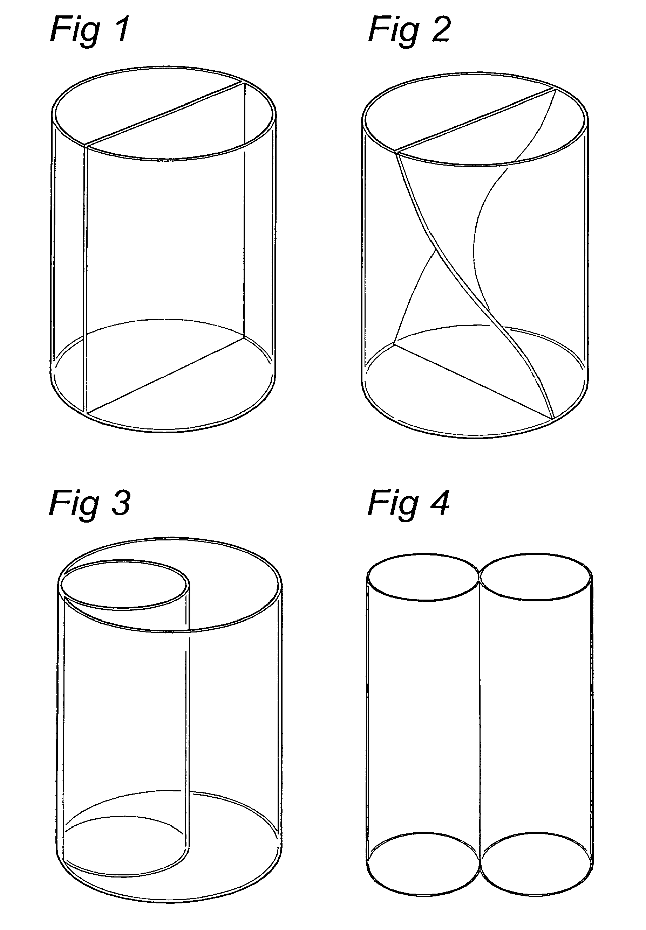

An experiment was conducted in which 9 participants were asked to simultaneously drink lemon juice and sunflower oil from a single container. The containers used are depicted in Figure 1. These containers were cylindrically shaped (internal diameter=25 mm; internal height=40 mm) and comprised a vertical partitioning dividing the interior of the cylinder into two identical compartments. One compartment was filled with 6 ml lemon juice, the other with 6 ml sunflower oil.

The participants were instructed to ensure that during drinking the partitioning was kept in a vertical position. After drinking the contents of the containers the participants agreed that they had not perceived a fatty mouthfeel.

### Example 2

Example 1 was repeated, using the containers depicted in Figure 2. As shown in Figure 2, the partitioning of these containers was twisted counter clockwise from top to bottom. It was observed by participants that if the contents of the container were ingested in such a way that the oil phase entered the mouth on the left side and the juice on the right side (from the participant's perspective), no fatty mouthfeel was perceived. However, if the container was turned 180 degrees, a pronounced fatty mouthfeel was perceived by the same participants.

These results suggest that it in order to avoid a fatty mouthfeel it is important to ensure that the oil does not contact the tongue before the juice.

### Example 3

An experiment was conducted in which 5 participants were asked to simultaneously drink bilberry juice and sunflower oil from a single container. The containers used are depicted in Figure 2. These containers were cylindrically shaped and comprised two compartments, an outer cylindrical compartment having an internal diameter of 33 mm and an internal height of 40 mm and an inner cylindrical compartment having an internal diameter of 25 mm and an internal height of 40 mm, said inner cylindrical compartment being located adjacent to the rim of the outer cylindrical compartment. The inner compartment was filled with 9 ml bilberry juice, the outer compartment with 9 ml sunflower oil.

The participants were instructed to ensure that during drinking the opening of the inner compartment was located at the bottom of the opening of the outer compartment. After drinking the contents of the containers the participants agreed that they had not perceived a fatty mouthfeel.

### Example 4

Example 3 was repeated, except that the containers used comprised two adjacent cylindrical containers (internal diameter=10 mm; internal height=32 mm) as shown in Figure 4. The contents of the containers were ingested by introducing the two compartments into the mouth in a side-by-side fashion. Again the participants agreed that they had not perceived a fatty mouthfeel.

## Claims

1. A beverage container comprising two separate compartments, a first compartment having an internal volume of 2-50 ml holding an aqueous liquid and a second compartment having an internal volume of 2-50 ml holding an oleogenous liquid, said aqueous liquid and said oleogenous liquid being present in the container in a weight ratio of less than 3:1, said first compartment comprising a first dispensing aperture and said second compartment comprising a second dispensing aperture, wherein the first dispensing aperture and the second dispensing aperture can be simultaneously positioned in the mouth of an average adult human.

2. Beverage container according to claim 1, wherein the container contains the aqueous liquid and the oleogenous liquid in a weight ratio within the range of 1:5 to 2:1.

3. Beverage container according to claim 1 or 2, wherein the oleogenous liquid contains at least 50 wt.% of triglycerides.

4. Beverage container according to any one of the preceding claims, wherein the oleogenous liquid contains at least 10 wt.% of ω-3 polyunsaturated fatty acids.

5. Beverage container according to any one of the preceding claims, wherein the aqueous liquid contains one or more of:
• at least 1.4 mg iron;
• at least 0.2 mg copper;
• at least 1.5 mg zinc;
• at least 100 mg calcium;
• at least 30 mg magnesium

6. Beverage container according to any one of the preceding claims, wherein the aqueous liquid contains one or more of
• at least 6 mg of vitamin C;
• at least 0.14 mg of vitamin B1
• at least 0.16 mg of vitamin B2
• at least 1.8 mg of Niacin
• at least 0.6 mg of Pantothenic acid
• at least 0.2 mg of vitamin B6

7. Beverage container according to any one of the preceding claims, wherein the oleogenous liquid contains 60 - 2000 mg of ω-3 polyunsaturated fatty acids selected from the group consisting of docosahexaenoic acid, eicosapentaenoic acid and combinations thereof.

8. Beverage container according to any one of the preceding claims, wherein the oleogenous liquid contains 7- 100 mg of isoflavones.

9. Beverage container according to any one of the preceding claims, wherein the oleogenous liquid contains 1 - 8 mg of lycopene.

10. Beverage container according to any one of the preceding claims, wherein the oleogenous liquid contains 1- 250 mg of vitamin E.
